# EUROPÄISCHE PATENTANMELDUNG

(11) **EP 0 975 133 A2**
(43) Veröffentlichungstag der Anmeldung: **26.01.2000**
(21) Anmeldenummer: 99440206.3
(22) Anmeldetag: 22.07.1999
(51) Int. Cl.: H04M 3/42, H04M 1/00

(54) **Verfahren und Gerät zum Bereitstellen von Funktionen an einem Telekommunikations-Endgerät**

(30) Priorität: 24.07.1998 DE 19833310
(71) Anmelder: ALCATEL, 75008 Paris (FR)
(72) Erfinder: Siegmund, Gerd, 70435 Stuttgart (DE)
(74) Vertreter: Brose, Gerhard, Dipl.-Ing.

(57) **Zusammenfassung**

Die vorliegende Erfindung betrifft ein Verfahren, eine Steuerungseinrichtung (CS), ein Endgerät (TER), eine Vermittlungsstelle, eine Einkoppelungseinrichtung, eine Auskoppelungseinrichtung und eine Kombinationsseinrichtung zum Bereitstellen von Funktionen an einem Endgerät (TER), das mit einer Vermittlungsstelle (EX) über eine Teilnehmeranschlußleitung (SL) verbunden ist. Dabei wird eine Verbindung (VL1, VL2) der Teilnehmeranschlußleitung über eine netzseitige Steuerungseinrichtung (CS) geführt, indem eine Auskoppelungsvorrichtung (DECP) die Verbindung aus der Teilnehmeranschlußleitung auskoppelt und eine Einkoppelungsvorrichtung (INCP) die Verbindung wieder in die Teilnehmeranschlußleitung einkoppelt. Die Steuerungseinrichtung stellt die Funktionen an dem Endgerät durch Manipulation von Daten bereit, die auf der Verbindung übertragen werden.

## Beschreibung

Die vorliegende Erfindung betrifft ein Verfahren gemäß dem Oberbegriff des Anspruchs 1, sowie eine Steuerungseinrichtung gemäß dem Oberbegriff des Anspruchs 7 hierfür, ein Endgerät gemäß dem Oberbegriff des Anspruchs 8 hierfür, eine Vermittlungsstelle gemäß dem Oberbegriff des Anspruchs 9 hierfür, eine Einkoppelungseinrichtung gemäß dem Oberbegriff des Anspruchs 10 hierfür, eine Auskoppelungseinrichtung gemäß dem Oberbegriff des Anspruchs 11 und eine Kombinationsseinrichtung gemäß dem Oberbegriff des Anspruchs 12 hierfür.

Endgeräte für Telekommunikationsnetze, insbesondere Fernsprechapparate, sind mit verschiedenen Funktionen ausgestattet, die die Bedienung der Endgeräte vereinfachen oder erleichtern. Viele dieser Funktionen sind in die Endgeräte fest eingebaut und sofort verfügbar, z.B. eine Wahlwiederholung, mit der eine zuvor getätigte Rufnummernwahl mit einem einzigen Tastendruck auf eine spezielle Wahlwiederholungstaste wiederholt werden kann. Vor der Nutzung anderer Funktionen müssen die Endgeräte jedoch eigens programmiert werden, z.B. muß eine Rufnummernbelegung für eine Kurzwahltaste, mit der eine aus mehreren Ziffern bestehende Rufnummer durch einen einzigen Tastendruck abgerufen werden kann, in ein Endgerät eingegeben und im Endgerät abgespeichert werden.

Komfortablere Endgeräte gibt es insbesondere für Mobilfunk-Telekommunikationsnetze und für ISDN-Telekommunikationsnetze (ISDN = Integrated Services Digital Network). Endgeräte für solche Telekommunikationsnetze können z.B. den Namen eines Anrufenden in einer Anzeigevorrichtung anzeigen. Dazu muß in einen Speicher eines solchen Endgerätes die Rufnummer und der Name des Anrufenden von einem Bediener des Endgerätes eingegeben werden. Bei einem ankommenden Ruf wird vom Telekommunikationsnetz die Rufnummer des Anrufenden in Form einer sogenannten CLIP-Signalisierung (Calling Line Identification Presentation) übermittelt, so daß das Endgerät in seinem Speicher den Namen des Anrufenden anhand eines Vergleiches der übermittelten Rufnummer mit der gespeicherten Rufnummer auffinden und auf der Anzeigevorrichtung anzeigen kann.

Werden von einem Endgerät noch komfortablere Funktionen verlangt, so ist einerseits ein sehr leistungsfähiges Endgerät notwendig, z.B. ein Endgerät mit einem leistungsfähigen Prozessor und einem großen Speicher. Andrerseits lassen sich umfangreichere und individuell anpassbare Funktionen eines solchen Endgerätes, wie z.B. eine Bedienoberfläche, nur schwer direkt an einem solchen Endgerät konfigurieren, da dieses meist neben einer numerischen Tastatur nur einige Spezialtasten anbietet. Deshalb ist zu einer solchen Konfiguration meist ein Personal Computer erforderlich, der neben einer umfangreichen Tastatur auch über eine graphische Eingabehilfe, z.B. eine Maus, verfügt. Die an dem Personal Computer konfigurierten Funktionen werden dann als Softwarepaket über eine Verbindungsleitung auf das Endgerät geladen.

Aufgabe der Erfindung ist es, auf einfache und effiziente Weise Funktionen an einem Endgerät für ein Telekommunikotionsnetz durch Laden von Daten aus einer Steuerungseinrichtung bereitzustellen.

Diese Aufgabe wird durch ein Verfahren gemäß der technischen Lehre des Anspruchs 1, sowie eine Steuerungseinrichtung gemäß der technischen Lehre des Anspruchs 7, ein Endgerät gemäß der technischen Lehre des Anspruchs 8, eine Vermittlungsstelle gemäß der technischen Lehre des Anspruchs 9, eine Einkoppelungseinrichtung gemäß der technischen Lehre des Anspruchs 10, eine Auskoppelungseinrichtung gemäß der technischen Lehre des Anspruchs 11 und eine Kombinationseinrichtung gemäß der technischen Lehre des Anspruchs 12 gelöst. Weitere vorteilhafte Ausgestaltungen der Erfindung sind den abhängigen Ansprüchen und der Beschreibung zu entnehmen.

Im folgenden werden die Erfindung und ihre Vorteile anhand eines Ausführungsbeispiels unter Zuhilfenahme der Zeichnungen dargestellt.
- Figur 1: zeigt eine beispielhafte Anordnung zur Ausführung des erfindungsgemäßen Verfahrens mit einer Vermittlungsstelle EX, einer Auskoppelungseinrichtung DECP, einer Einkoppelungseinrichtung INCP, einem erfindungsgemäßen Endgerät TER und einer erfindungsgemäßen Steuerungseinrichtung CS.
- Figur 2: zeigt wie Figur 1 eine beispielhafte Anordnung zur Ausführung des erfindungsgemäßen Verfahrens, bei der jedoch die Auskoppelungseinrichtung DECP und die Einkoppelungseinrichtung INCP vertauscht angeordnet sind.
- Figur 3: zeigt wie die Figuren 1 und 2 eine beispielhafte Anordnung zur Ausführung des erfindungsgemäßen Verfahrens wobei jedoch anstatt der Auskoppelungseinrichtungen DECP und der Einkoppelungseinrichtung INCP zwei Kombinationseinrichtungen INDECP eingesetzt werden.
- Figur 4: zeigt eine erfindungsgemäße Auskoppelungseinrichtung DECPX.
- Figur 5: zeigt eine erfindungsgemäße Einkoppelungseinrichtung INCPX.
- Figur 6: zeigt eine erfindungsgemäße Kombinationseinrichtung INDECPX.

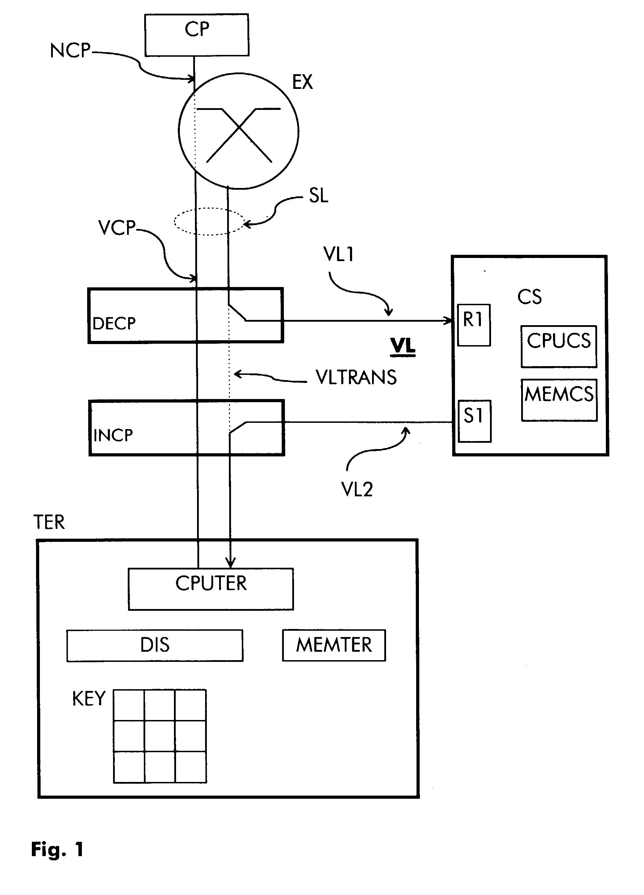

Eine beispielhafte Anordnung zur Ausführung des erfindungsgemäßen Verfahrens ist in Figur 1 dargestellt. Ein Endgerät TER ist über eine Teilnehmeranschlußleitung SL mit einer Vermittlungsstelle EX verbunden. Die Teilnehmeranschlußleitung SL kann auch über eine in Figur 1 nicht dargestellte Vorfeldeinrichtung führen, die neben der Teilnehmeranschlußleitung SL weitere Teilnehmeranschlußleitungen zum Anschluß an die Vermittlungsstelle EX bündelt. Das Endgerät TER enthält ein Steuermittel CPUTER, das die Funktionen des Endgerätes TER steuert, eine Anzeigevorrichtung DIS, die zur Visualisierung von Informationen dient, ein Tastenfeld KEY, mit dem das Endgerät TER bedient werden kann und einen Speicher MEMTER, in dem Daten für Grundfunktionen und Daten für Sonderfunktionen abgelegt sind. Das Endgerät TER verfügt über die Grundfunktionen eines Fernsprechapparates, wie z.B. Rufnummernwahl, Spracheingabe und Sprachausgabe. Die für Spracheingabe und Sprachausgabe erforderlichen Mittel, Mikrophon bzw. Lautsprecher sind allgemein bekannt und deshalb in Figur 1 nicht dargestellt. Weiterhin kann das Endgerät TER durch ein später noch erläutertes Zusammenwirken mit einer Steuerungseinrichtung CS weitere Sonderfunktionen anbieten, wie z.B. eine besondere Information auf der Anzeigevorrichtung DIS oder ein besonderes Layout derselben.

Auf der Teilnehmeranschlußleitung SL bestehen eine Verbindung VCP und eine Verbindung VL, die in Figur 1 aufgeteilt in einen Verbindungsabschnitt VL1 und einen Verbindungsabschnitt VL2 dargestellt ist. Der Verlauf der Teilnehmeranschlußleitung SL wird in Figur 1 durch die Verbindung VCP und diejenigen Teile der Verbindungsabschnitte VL1 und VL2 angedeutet, die parallel zu der Verbindung VCP verlaufen. Die Bündelung der Verbindung VCP und der Verbindung VL auf der Teilnehmeranschlußleitung SL ist lediglich durch eine gestrichelte Kreislinie angedeutet. Wenn die Teilnehmeranschlußleitung SL eine Teilnehmeranschlußleitung für analoge Übertragung ist, kann die Verbindung VCP z.B. eine analoge Verbindung zur Übertragung von Telefongesprächen sein, in welche die Verbindung VL in Form einer In-Band-Signalisierung einmoduliert wird. Eine solche Einmodulierung von Signalen für ein Endgerät durch eine Vermittlungsstelle ist z.B. in dem Artikel ,,Rufnummernanzeige am analogen Anschluß" in der Zeitschrift Funkschau, Ausgabe 10/98, auf den Seiten 54 bis 57 beschrieben. Wenn die Teilnehmeranschlußleitung SL eine Teilnehmeranschlußleitung eines ISDN-Telekommunikationsnetzes mit beispielsweise zwei B-Kanälen und einerm D-Kanal ist, kann z.B. die Verbindung VCP ein B-Kanal, die Verbindung VL ein D-Kanal oder ein weiterer B-Kanal auf der ISDN-Teilnehmeranschlußleitung sein. Die Teilnehmeranschlußleitung SL könnte aber auch eine ADSL-Teilnehmeranschlußleitung (Asymmetric Digital Subscriber Line) sein, auf der die Verbindung VCP auf einem ersten Übertragungskanal und die Verbindung VL auf einem zweiten Übertragungskanal unterhalten wird.

Über die Verbindung VCP kann die Vermittlungsstelle EX das Endgerät TER mit weiteren Telekommunikationseinrichtungen verbinden. Eine solche Verbindung ist in Figur 1 dargestellt, bei der die Vermittlungsstelle EX das Endgerät TER mit einer Telekommunikationseinrichtung CP über einen Verbindungsabschnitt NCP verbindet. Auf der Verbindung zwischen dem Endgerät TER und der Telekommunikationseinrichtung CP kann z.B. ein Telefongespräch geführt werden oder eine Datenübertragung erfolgen. Der Verbindungsabschnitt NCP führt z.B. über ein in Figur 1 nicht dargestelltes Telekommunikationsnetz. Die Telekommunikationseinrichtung CP kann aber auch direkt an die Vermittlungsstelle EX angeschlossen sein. Der Verbindungsabschnitt NCP ist dann z.B. eine Teilnehmeranschlußleitung der Vermittlungsstelle EX.

Im folgenden wird zunächst eine Übertragung und Bearbeitung von Daten erläutert, die von der Vermittlungsstelle EX ausgehend auf der Verbindung VL und auf der Verbindung VCP an das Endgerät TER gesendet werden. Auf der Verbindung VCP werden von der Vermittlungsstelle EX Daten in Richtung Endgerät TER weiterversendet, die die Telekommunikationseinrichtung CP an das Endgerät TER sendet. Auf der Verbindung VL sendet dagegen die Vermittlungsstelle EX Daten an das Endgerät TER. Die Verbindung VCP ist in Figur 1 so dargestellt, daß sie sowohl über eine Auskoppelungseinrichtung DECP als auch eine Einkoppelungseinrichtung INCP führt. Der Datenfluß auf der Verbindung VCP wird aber von diesen beiden Einrichtungen nicht beeinflußt.

Aus der Teilnehmeranschlußleitung SL koppelt die Auskoppelungseinrichtung DECP den Verbindungsabschnitt VL1 der Verbindung VL aus. Wenn die Teilnehmeranschlußleitung SL eine ISDN-Teilnehmeranschlußleitung ist, wird von der Auskoppelungseinrichtung DECP z.B. der D-Kanal aus der Teilnehmeranschlußleitung ausgekoppelt. Dies ist sehr leicht möglich, da auf der Teilnehmeranschlußleitung SL digital übertragen wird, so daß die Auskoppelungseinrichtung DECP als Demultiplexer die Datenpakete des D-Kanales aus dem Datenstrom zu dem Endgerät TER hin entnehmen kann. Die Auskoppelungseinrichtung DECP sendet dann die von ihr auf dem D-Kanal empfangenen und ausgekoppelten D-Kanal-Datenpakete zu der Steuerungseinrichtung CS weiter und bildet so den Verbindungsabschnitt VL1 zwischen Vermittlungsstelle EX und Steuerungseinrichtung CS. Wie in den folgenden Abschnitten noch näher erläutert wird, kann die Steuerungseinrichtung CS auf der Verbindung VL transportierte Daten manipulieren, z.B. nach vorbestimmten Regeln oder nach Vorgabe eines Benutzers des Endgerätes TER, und auf dem Verbindungsabschnitt VL2 an das Endgerät TER versenden. Mit Hilfe dieser Daten ist das Endgerät TER dann in der Lage, dem Benutzer Funktionen bereitzustellen.

Ein D-Kanal einer ISDN-Teilnehmeranschlußleitung wird hauptsächlich zum Austausch von Steuerungsdaten zwischen einer Vermittlungsstelle und einem Endgerät benutzt. So kann z.B. die Vermittlungsstelle EX auf dem D-Kanal auf der Teilnehmeranschlußleitung SL mit Hilfe einer sogenannten "Setup"-Nachricht dem Endgerät TER signalisieren, daß ein für das Endgerät TER bestimmter Ruf von der Vermittlungsstelle EX zu dem Endgerät TER durchschaltbar wäre. Ebenso kann die Vermittlungsstelle EX eine D-Kanal-Nachricht mit der Rufnummer eines Anrufenden, eine sogenannte "CLIP"-Nachricht (= Calling Line Identification Presentation) senden, mit deren Hilfe das Endgerät TER bei einem ankommenden Ruf die Rufnummer des Anrufenden anzeigen kann. Ist die Verbindung VL der D-Kanal einer ISDN-Teilnehmeranschlußleitung, kann die Auskoppelungseinrichtung DECP solche D-Kanal-Datenpakete aus dem Datenstrom auf der Teilnehmeranschlußleitung SL auskoppeln und der Steuerungseinrichtung CS zusenden.

Auch dann, wenn die Teilnehmeranschlußleitung SL eine analoge Teilnehmeranschlußleitung ist, kann die Vermittlungsstelle EX mit den D-Kanal-Daten vergleichbare Daten an das Endgerät TER senden. In dem eingangs erwähnten Artikel ,,Rufnummernanzeige am analogen Anschluß" in der Zeitschrift Funkschau, Ausgabe 10/98 wird z.B. beschrieben, wie eine Vermittlungsstelle durch Einmodulieren von Signalen in das Sprachband einer Teilnehmeranschlußleitung, also durch eine In-Band-Signalisierung ebenfalls eine CLIP-Nachricht an ein Endgerät senden kann. Das Endgerät muß dann diese CLIP-Nachricht durch Demodulation wieder aus dem Sprachband entnehmen. Auch die Vermittlungsstelle EX und das Endgerät TER können in solcher Weise zusammenwirken. Dann ermittelt die Auskoppelungseinrichtung DECP die von der Vermittlungsstelle EX stammenden In-Band-Signale auf der Teilnehmeranschlußleitung SL und sendet diese an die Steuerungseinrichtung CS. Zusätzlich kann die Auskoppelungseinrichtung DECP auch feststellen, wenn die Vermittlungsstelle EX dem Endgerät TER z.B. während der Rufphase Signale für Rufzeichen sendet. Auch solche Informationen gibt die Auskoppelungseinrichtung DECP dann an die Steuerungseinrichtung CS weiter. Auch dann, wenn der Verbindungsabschnitt VL1 zwischen Vermittlungsstelle EX und Auskoppelungseinrichtung DECP durch eine analoge In-Band-Siganalisierung hergestellt wird, werden Daten zwischen Auskoppelungseinrichtung DECP und Steuerungseinrichtung CS vorteilhafterweise digital ausgetauscht, da die Komponenten der Steuerungseinrichtung CS vorzugsweise Komponenten für digitale Datenverarbeitung sind.

Die Steuerungseinrichtung CS ist nicht wie z.B. ein Personal Computer einer CSTA-Anlage (Computer Supported Telephony Applications) in unmittelbarer Nähe einem Endgerät angeordnet, sondern ist netzseitig plaziert, vorzugsweise in der Nähe der Vermittlungsstelle EX. Dann kann die Steuerungseinrichtung CS Funktionen in später noch zu erläuternder Weise für mehrere, dem Endgerät TER vergleichbare und jeweils über eine Teilnehmeranschlußleitung an die Vermittlungsstelle EX angeschlossene Endgeräte erbringen. Die Steuerungseinrichtung CS weist ein Steuermittel CPUCS, einen Speicher MEMCS, eine Ausgangsschnittstelle S1 zu dem Verbindungsabschnitt VL2 und eine Eingangsschnittstelle R1 zu dem Verbindungsabschnitt VL1 auf. Die Steuerungseinrichtung CS kann z.B. ein leistungsfähiger Rechner sein mit einem Prozessor als Steuermittel CPUCS und verschiedenartigen Speichermitteln als Speicher MEMCS, z.B. einem RAM (Random Access Memory) und einem magnetischen Festplattenspeicher. Das Steuermittel CPUCS, der Speicher MEMCS, die Eingangsschnittstelle R1 und die Ausgangsschnittstelle S1 der Steuerungseinrichtung CS sind intern durch in Figur 1 nicht dargestellte Verbindungen, z.B. durch einen gemeinsamen Bus miteinander verbunden. Das Steuermittel CPUCS führt Befehlsfolgen aus Maschinenbefehlen aus, die als Programmodule in dem Speicher MEMCS abgelegt und von dort durch das Steuermittel CPUCS abrufbar sind. Es kann sich bei der Steuerungseinrichtung CS um einen einzelnen Rechner in der Art eines Personal Computers oder einer Workstation handeln, eine Einschubkarte für die Vermittlungsstelle, einem sogenannten ,,Embedded System" oder auch um ein Netzwerk aus mehreren Rechnern. Die Bauform der Steuerungseinrichtung CS ist jedoch zur Ausführung der Erfindung nicht wesentlich.

Wenn die Steuerungseinrichtung CS auf dem Verbindungsabschnitt VL1 von der Auskoppelungseinrichtung DECP gesendete Daten empfangen hat, z.B. die erwähnte Setup-Nachricht oder die CLIP-Nachricht, analysiert die Steuerungseinrichtung CS zunächst diese Nachrichten. Dabei werden diese Nachrichten von der Eingangsschnittstelle R1 an das Steuermittel CPUCS weitergegeben, das dann z.B. durch Vergleich mit in dem Speicher MEMCS gespeicherten Kenndaten feststellt, ob und in welcher Art durch die empfangene Nachricht weitere Funktionen seitens der Steuerungseinrichtung CS erforderlich sind. Die Setup-Nachricht könnte die Steuerungseinrichtung CS z.B. unbearbeitet an das Endgerät TER über den Verbindungsabschnitt VL2 weiterversenden. Dazu sendet die Steuerungseinrichtung CS die Setup-Nachricht über die Ausgangsschnittstelle S1 an die Einkoppelungseinrichtung INCP, die die Nachricht dann in den Datenstrom auf der Teilnehmeranschlußleitung SL einkoppelt, z.B. indem die Einkoppelungseinrichtung INCP die Setup-Nachricht wieder als D-Kanal-Datenpaket in einen ISDN-Datenstrom auf der Teilnehmeranschlußleitung SL einreiht. Wenn es durch eine entsprechende Konfiguration der Steuerungseinrichtung CS so vorherbestimmt ist, kann diese, angeregt durch den Empfang der Setup-Nachricht, nach dem Datenpaket mit der Setup-Nachricht auch weitere Datenpakete auf dem Verbindungsabschnitt VL2 an das Endgerät TER versenden. In diesen Datenpaketen können z.B. Steuerungsinformationen oder Befehlssequenzen enthalten sein, die das Steuermittel CPUTER ausführen kann. Damit kann das Endgerät TER für Sonderfunktionen ertüchtigt werden. Wenn z.B. das Endgerät TER üblicherweise nicht für den Empfang von Faxnachrichten ausgelegt ist, kann die Steuerungseinrichtung CS z.B. eine Software in den Speicher MEMTER des Endgerätes TER laden, mit der das Steuermittel CPUTER eine anschließend an die Setup-Nachricht über die Verbindung VCP empfangene Faxnachricht zur Speicherung für einen späteren Ausdruck an den Speicher MEMTER oder zur Anzeige an der Anzeigevorrichtung DIS weitergeben kann.

Eine wesentlich einfacher zu realisierende, in der Praxis für einen Benutzer des Endgerätes TER jedoch sehr nützliche Funktion wird durch das Zusammenwirken von Steuerungseinrichtung CS und Endgerät TER im Zusammenhang mit der erwähnten CLIP-Nachricht erbracht. Auch eine CLIP-Nachricht kann die Steuerungseinrichtung CS zunächst "mithören" und unverändert an das Endgerät TER weiterversenden. Das Steuermittel CPUTER wird dann die in der CLIP-Nachricht enthaltene Rufnummer zur Anzeige an die Anzeigevorrichtung DIS weitergeben. Allein die Anzeige einer Rufnummer genügt dem Benutzer jedoch oft nicht, um daraus auf den Namen des Anrufers zu schließen. Damit der Benutzer jedoch nicht in den Speicher MEMTER seines Endgerätes TER eine möglicherweise sehr umfangreiche Zuordnungstabelle "Rufnummer zu Namen" einspeichern muß, ist in dem Speicher MEMCS der Steuerungseinrichtung CS eine derartige Zuordnungstabelle abgelegt, in der zu einer Auswahl von Rufnummern jeweils der Namen des Anrufers steht. Im Anschluß an die CLIP-Nachricht sendet die Steuerungseinrichtung CS auch den zugehörigen Namen des Anrufers in Form einer weiteren Nachricht über den Verbindungsabschnitt VL2 an das Endgerät TER, das dann zusätzlich oder alternativ diesen Namen an seiner Anzeigevorrichtung DIS anzeigen kann.

Auch wenn die Teilnehmeranschlußleitung SL eine analoge Teilnehmeranschlußleitung ist, kann die Steuerungseinrichtung CS passend zu einer auf dem Verbindungsabschnitt VL1 empfangenen CLIP-Nachricht eine Namens-Nachricht mit dem Namen eines Anrufers an das Endgerät TER versenden. Die CLIP-Nachricht sowie die Namens-Nachricht sendet die Steuerungseinrichtung CS zunächst an die Einkoppelungseinrichtung INCP, die die Nachricht dann in Form einer In-Band-Signalisierung auf Signale auf der Teilnehmeranschlußleitung SL aufmoduliert. Das Endgerät TER demoduliert diese In-Band-Signale mit Hilfe eines in Figur 1 nicht dargestellten Demodulators und zeigt dann Rufnummer und Namen des Anrufers auf der Anzeigevorrichtung DIS an.

Im Falle des "Mithörens" und Ergänzens von Daten auf der Verbindung VL durch die Steuerungseinrichtung CS ist es insbesondere im Falle einer analogen Teilnehmeranschlußleitung SL möglich, daß die Verbindung VL zwischen dem Endgerät TER und der Vermittlungsstelle EX über die Auskoppelungseinrichtung DECP und die Einkoppelungseinrichtung INCP hinweg durchgehend ist. In Figur 1 ist dies durch einen zusätzlichen Verbindungspfad VLTRANS verdeutlicht, der eine Art Bypass der Verbindung VL über die Steuerungseinrichtung CS ist und deshalb als eine besondere Ausführungsform der Erfindung lediglich gestrichelt gezeichnet ist. In einer solchen Konfiguration hört die Auskoppelungseinrichtung DECP In-Band-Signale auf der Teilnehmeranschlußleitung SL mit und leitet deren Inhalt der Steuerungseinrichtung CS zu, sendet aber die In-Band-Signale auf der Teilnehmeranschlußleitung SL unverändert über den Verbindungspfad VLTRANS an die Einkoppelungseinrichtung INCP weiter. Diese moduliert dann gegebenenfalls von der Steuerungseinrichtung CS gesendete zusätzliche Daten, z.B. die erwähnte Namens-Nachricht auf die Verbindung VL auf. Sofern der Verbindungspfad VLTRANS bei einer analogen Teilnehmeranschlußleitung SL nicht gewünscht ist, kann die Auskoppelungseinrichtung DECP auch In-Band-Signale nach deren Demodulation und Weiterversand an die Steuerungseinrichtung CS aus dem Datenstrom auf der Teilnehmeranschlußleitung SL herausfiltern.

Neben dem Mithören und Ergänzen von Daten auf der Verbindung VL ist es auch möglich, daß die Steuerungseinrichtung CS Daten aus dem Datenstrom zu dem Endgerät TER entnimmt. Wenn das Endgerät TER z.B. nicht für eine Anzeige einer CLIP-Nachricht in der Lage ist oder wenn eine solche Anzeige von einem Benutzer des Endgerätes TER nicht gewünscht ist, kann die Steuerungseinrichtung CS die CLIP-Nachricht aus dem Datenstrom auf der Verbindung VL herausfiltern. Der Benutzer kann der Steuerungseinrichtung CS auch vorgeben, daß er anstatt einer Rufnummernanzeige nur den Namen eines Anrufers angezeigt haben will. Dann entnimmt die Steuerungseinrichtung CS die CLIP-Nachricht aus dem Datenstrom zu dem Endgerät TER und fügt statt der CLIP-Nachricht eine Namensnachricht in den Datenstrom ein.

Über den Verbindungsabschnitt VL2 kann die Steuerungseinrichtung CS das Endgerät TER auch von sich aus mit Nachrichten versorgen. Ein Nutzer der Steuerungseinrichtung CS, z.B. ein Diensteanbieter von Telekommunikationsdienstleistungen, kann an der Steuerungseinrichtung CS einen Nachrichtentext eingeben, z.B. einen Nachrichtentext mit einer Werbung oder mit einem aktuellen Gebührentarif für Telekommunikationsdienstleistungen. Der Nachrichtentext wird dann von der Steuerungseinrichtung CS an das Endgerät TER gesendet und vom Endgerät TER über die Anzeigevorrichtung DIS angezeigt.

Weiterhin kann das Endgerät TER von der Steuerungseinrichtung CS mit Funktionen ausgestattet werden, die als ausführbare Programme oder Programmbausteine, z.B. sogenannte Makros, von der Steuerungseinrichtung CS erzeugt werden oder in dem Speicher MEMCS abgelegt sind und über den Verbindungsabschnitt VL2 in das Endgerät TER geladen werden. Das Endgerät TER speichert diese Programme in seinem Speicher MEMTER ab und kann die Programme jederzeit zur Bereitstellung von Funktionen aus seinem Speicher MEM abrufen und in dem Steuermittel CPUTER ausführen.

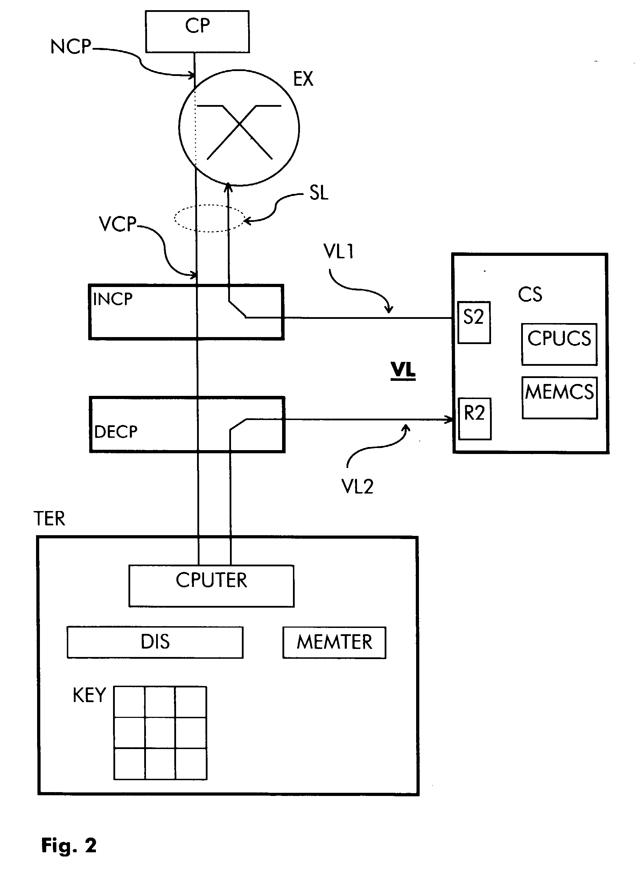

In Figur 2 ist eine Anordnung dargestellt, mit der eine Anwendung des erfindungsgemäßen Verfahrens in Richtung von Endgerät TER zu Vermittlungsstelle EX möglich ist. Die in Figur 2 dargestellten Komponenten sind in ihrer Funktion und Wirkungsweise mit den aus Figur 1 bekannten Komponenten identisch und tragen deshalb auch deren Bezugszeichen. Im Vergleich zu Figur 1 sind jedoch die Auskoppelungseinrichtung DECP und die Einkoppelungseinrichtung INCP gegenseitig vertauscht und die Pfeilspitzen der Verbindungsabschnitte VL1 und VL2 zeigen im Vergleich zu Figur 1 in entgegengesetzte Richtung, um den umgekehrten Datenfluß auf der Verbindung VL von dem Endgerät TER über die Steuerungseinrichtung CS zu der Vermittlungsstelle EX zu verdeutlichen. Wegen des im Vergleich zu Figur 1 umgekehrten Datenflusses auf der Verbindung VL weist die Steuerungseinrichtung CS außerdem zu dem Verbindungsabschnitt VL1 hin statt der Eingangsschnittstelle R1 eine Ausgangsschnittstelle S2 auf und zu dem Verbindungsabschnitt VL2 hin statt der Ausgangsschnittstelle S1 eine Eingangsschnittstelle R2. Die Funktionen der Auskoppelungseinrichtung DECP und der Einkoppelungseinrichtung INCP sind aus Figur 1 prinzipiell bekannt, sowohl wenn die Teilnehmeranschlußleitung SL eine analoge Teilnehmeranschlußleitung als wenn sie eine digitale Teilnehmeranschlußleitung ist. Wenn das Endgerät TER auf der Verbindung VL an die Vermittlungsstelle EX Daten sendet, koppelt die Auskoppelungseinrichtung DECP aus der Teilnehmeranschlußleitung SL diese Daten aus und sendet diese an die Steuerungseinrichtung CS. Dadurch wird der Verbindungsabschnitt VL2 der Verbindung VL gebildet. Nachdem die Steuerungseinrichtung CS die auf dem Verbindungsabschnitt VL2 empfangenen Daten analysiert, gegebenenfalls durch eigene Daten ergänzt oder ersetzt hat, sendet die Steuerungseinrichtung CS die von ihr manipulierten Daten zu der Einkoppelungseinrichtung INCP. Die Einkoppelungseinrichtung INCP koppelt dann diese Daten in die Teilnehmeranschlußleitung SL ein und bildet so den Verbindungsabschnitt VL1 der Verbindung VL.

Auch bei einem Datenfluß auf der Verbindung VL, wie in Figur 2 gezeigt, können das Endgerät TER und die Steuerungseinrichtung CS erfindungsgemäß zusammenwirken. Es ist z.B. möglich, daß das Endgerät TER und die Steuerungseinrichtung CS zusammen eine Kurzwahlfunktion ermöglichen. Dabei kann das Endgerät TER bei einem Tastendruck auf eine Taste des Tastenfeldes KEY eine Nachricht über den Verbindungsabschnitt VL2 an die Steuerungseinrichtung CS senden, um die Steuerungseinrichtung CS über das Ereignis des Tastendruckes zu informieren. Ausgelöst durch diese Nachricht kann dann die Steuerungseinrichtung CS weitere Funktionen erbringen, z.B. der Vermittlungsstelle EX eine Setup-Nachricht mit einer Rufnummer einer gewünschten Kommunikstionspartnereinrichtung senden, um der Vermittlungsstelle EX zu signalisieren, daß von dem Endgerät TER aus ein Rufwunsch zu der Kommunikationspartnereinrichtung abgesendet wurde. Die Vermittlungsstelle EX kann dann die gewünschte Rufverbindung aufbauen, z.B. die Verbindung VCP zu der Telekommunikationseinrichtung CP. Zwar kann eine Zuordnung von Tastendruck zu Rufnummer prinzipiell auch in dem Speicher MEMTER abgelegt werden, so daß das Endgerät TER auch ohne Mitwirken der Steuerungseinrichtung CS einem Benutzer des Endgerätes TER eine Kurzwahlfunktion anbieten kann. Dann muß allerdings in dem Speicher MEMTER Speicherkapazität vorgehalten werden und der Benutzer muß Kenntnisse über die Programmierung einer Kurzwahlfunktion für das Endgerät TER besitzen. Außerdem wird die Steuerungseinrichtung CS vorzugsweise von einem Anbieter für Telekommunikationsdienstleistungen gewartet, der im Auftrag des Benutzers die Zuordnung von Tastendruck zu Rufnummer in den Speicher MEMCS einprogrammieren kann. Besonders komfortabel für den Benutzer wird diese Dienstleistung insbesondere dann, wenn sich die Rufnummer eines durch einfachen Tastendruck wählbaren Kommunikationspartners tageszeitabhängig ändert und dementsprechend die Rufnummer tageszeitabhängig in dem Speicher MEMCS geändert werden muß. So kann z.B. ein Arzt tagsüber in seiner Praxis, abends in seiner Wohnung durch einfachen Tastendruck auf ein und dieselbe Taste des Endgerätes TER erreicht werden und die Steuerungseinrichtung CS wählt jeweils die aktuell gültige Rufnummer des Arztes aus.

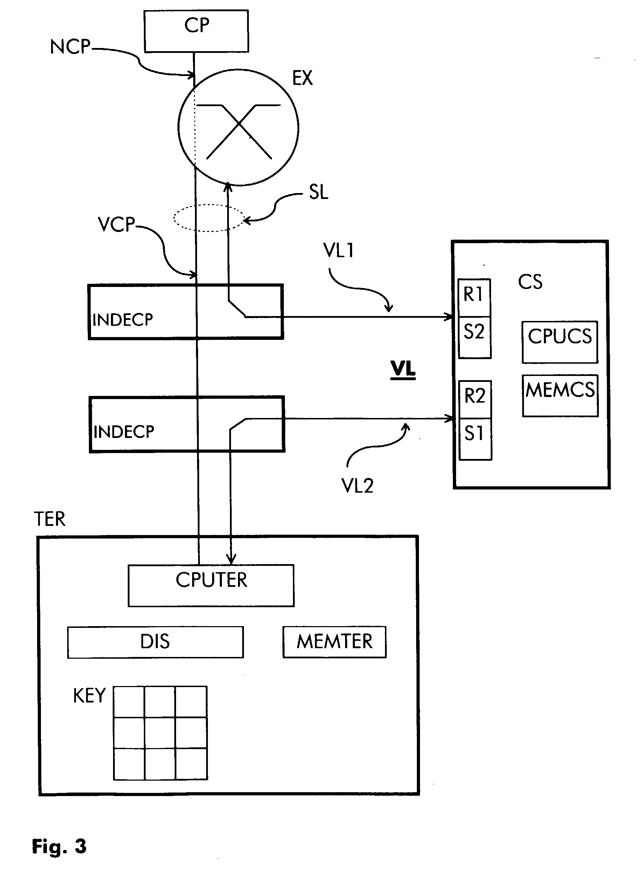

In den Figuren 1 und 2 wurde die Verbindung VL jeweils als eine unidirektionale Verbindung zwischen der Vermittlungsstelle EX und dem Endgerät TER dargestellt. Die Verbindung VL kann aber auch eine bidirektionale Verbindung sein. Eine solche Anordnung ist in Figur 3 dargestellt. Dort ist die bidirektionale Übertragung von Daten auf den Verbindungsabschnitten VL1 und VL2 dadurch verdeutlicht, daß beide Verbindungsabschnitte jeweils an beiden Enden eine Pfeilspitze haben. Die Steuerungseinrichtung CS weist in Figur 3 zu dem Verbindungsabschnitt VL1 hin zum Empfang von Daten die aus Figur 1 bekannte Eingangsschnittstelle R1 auf und zum Senden von Daten die aus Figur 2 bekannte Sendeschnittstelle S2. Analog weist die Steuerungseinrichtung CS zu dem Verbindungsabschnitt VL2 hin zum Senden von Daten die aus Figur 1 bekannte Sendeschnittstelle S1 und zum Empfang von Daten die aus Figur 2 bekannte Eingangsschnittstelle R2 auf. Im Vergleich zu Figur 1 ist anstatt der Auskoppelungseinrichtung DECP und der Einkoppelungseinrichtung INCP jeweils eine Kombinationseinrichtung INDECP in die Teilnehmeranschlußleitung SL geschaltet. Jede der Kombinationseinrichtungen INDECP führt sowohl die bereits beschriebenen Funktionen der Auskoppelungseinrichtung DECP als auch die Funktionen der Einkoppelungseinrichtung INCP aus.

Durch die in Figur 3 dargestelle bidirektionale Verbindung VL kann das Endgerät TER mit der Steuerungseinrichtung CS einem Benutzer des Endgerätes TER in noch weitaus größerem Umfang Komfortfunktionen anbieten, als dies bei einer unidirektionalen Verbindung VL wie in den Figuren 1 und 2 jeweils möglich ist, da das Endgerät TER und die Steuerungseinrichtung CS interaktiv zusammenwirken können. Im folgenden werden einige Anwendungsbeispiele dazu vorgestellt. Es kann z.B. das Endgerät TER von der Steuerungseinrichtung CS gelieferte Daten vor dem Aufbau eines Rufes nutzen. In dem Speicher MEMCS der Steuerungseinrichtung CS könnte z.B. ein Adreßbuch abgelegt sein, das die Namen und die Rufnummern eines ausgewählten Personenkreises enthält und für das Endgerät TER konfiguriert ist. Der Inhalt des Adreßbuches wird durch interaktiven Datenaustausch zwischen Endgerät TER und Steuerungseinrichtung CS auf dem Verbindungsabschnitt VL2 dem Bediener zugänglich gemacht. Dabei werden Abfragen nach Daten an die Steuerungseinrichtung CS gesendet und die Steuerungseinrichtung CS antwortet darauf mit geeigneten Daten. Der Bediener kann durch Tastendruck an dem Tastenfeld KEY Abfragen nach Daten an die Steuerungseinrichtung CS senden. Die Einträge des Adreßbuches, z.B. Namen und Wohnort von Gesprächspartnern, werden abhängig von dem jeweiligen Tastendruck des Bedieners als Daten von der Steuerungseinrichtung CS an das Endgerät TER gesendet und dort über die Anzeigevorrichtung DIS angezeigt. Aus dem Adreßbuch kann der Bediener dann per Tastendruck auf dem Tastenfeld KEY einen Eintrag auswählen. Das Endgerät TER fragt die Rufnummer des zu diesem Eintrag gehörenden Teilnehmeranschlusses bei der Steuerungseinrichtung CS ab und verwendet die Rufnummer zum Rufaufbau an den Teilnehmeranschluß.

Mit Hilfe von Daten der Steuerungseinrichtung CS kann das Endgerät TER abhängig von vorangegangenen Bedienschritten des Bedieners eine Belegung der Tasten des Tastenfeldes KEY mit Funktionen verändern, die mit einem Druck auf einzelne Tasten am Endgerät TER jeweils abgerufen werden können. Eine solche mit konfigurierbaren Funktionen belegte Taste wird auch als ,,Softkey" bezeichnet. Die aktuelle Belegung der Tasten mit Funktionen wird dann z.B. durch Anzeige von Symbolen oder Texten auf der Anzeigevorrichtung DIS sichtbar gemacht. Dem Bediener steht damit eine Menüführung zur Verfügung, die mit den Daten der Steuerungseinrichtung CS an die aktuelle Situation angepaßt wird. Dem Bediener werden so die Funktionen des Endgerätes TER durch das Zusammenwirken von der Steuerungseinrichtung CS und dem Endgerät TER angeboten.

Über den Verbindungsabschnitt VL2 kann das Endgerät TER bei der Steuerungseinrichtung CS auch von sich aus Daten abfragen. Wenn z.B. auf der Steuerungseinrichtung CS eine Gebühreninformation über den aktuellen Stand der in einer Periode aufgelaufenen Gebühren für den Teilnehmeranschluß des Endgerätes TER abgelegt ist, kann das Endgerät TER, z.B. ausgelöst durch eine Zeitsteuerung zu Zeiten geringer Netzlast, die Steuerungseinrichtung CS nach der Gebühreninformation fragen. Diese Gebühreninformationen werden dann von der Steuerungseinrichtung CS versendet, von dem Steuermittel CPUTER empfangen und an die Anzeigevorrichtung DIS weitergegeben, wo sie dann angezeigt werden.

Auch während einer Verbindung mit der Telekommunikationseinrichtung CP können die Komfortfunktionen des Endgerätes TER genutzt werden. Wenn das Endgerät TER z.B. in einem ISDN-Telekommunikationsnetz verwendet wird, so kann sich ein dritter Kommunikationspartner mit seinem Rufwunsch zu dem Endgerät TER durch das ISDN-Komfortmerkmal "Anklopfen" bemerkbar machen. Das Endgerät TER empfängt dann neben-einer Nachricht mit der Rufnummer des anklopfenden dritten Kommunikationspartners von der Steuerungseinrichtung CS eine Nachricht mit dessen Namen, die es mit Hilfe der Daten der Steuerungseinrichtung CS, wie oben im Zusammenhang mit der CLIP-Nachricht bereits beschrieben, in eine Namensanzeige auf der Anzeigevorrichtung DIS umsetzen kann.

Durch die zentrale Datenhaltung und Datenpflege in der Steuerungseinrichtung CS ist es möglich, die Funktionen für ein einzelnes Endgerät TER, wie auch für eine Gruppe von solchen Endgeräten, die ähnlich wie das Endgerät TER ebenfalls an die Steuerungseinrichtung CS angeschlossen werden, gemeinsam an zentraler Stelle wechselnden Erfordernissen anzupassen. Die Daten für diese Funktionen werden entweder nur bei Bedarf abgefragt, wie z.B. bei einem ankommenden Ruf, oder im Rahmen eines Software-Updates in das Endgerät TER geladen, der durch den Bediener oder den Diensteanbieter veranlaßt wird. So verfügt der Bediener jeweils über aktuelle Daten für sein Endgerät TER.

Weil die Steuerungseinrichtung CS über eine Teilnehmeranschlußleitung das Endgerät TER mit Funktionen versehen kann, muß die Steuerungseinrichtung CS nicht im Besitz oder im unmittelbaren Verfügungsbereich des Bedieners des Endgerätes TER sein. Der Bediener kann z.B. einen Dritten, z.B. den bereits erwähnten Anbieter für Telekommunikationsdienste, damit beauftragen, an der Steuerungseinrichtung CS Funktionen für das Endgerät TER zu konfigurieren und diese Funktionen als Daten von der Steuerungseinrichtung CS an das Endgerät TER über die Verbindung VL zu laden. In diesem Fall muß sich der Bediener des Endgerätes TER keine Kenntnisse über die Programmierung seines Endgerätes TER aneignen. Eine Funktion könnte z.B. die erwähnte Rufnummernbelegung für eine Kurzwahltaste sein oder die Anzeige einer besonderen Information an der Anzeigevorrichtung DIS oder auch eine besondere Gestaltung der Anzeige in der Anzeigevorrichtung DIS. Der Diensteanbieter kann auch Funktionen an der Steuerungseinrichtung CS warten, d.h. von sich aus an aktuelle Erfordernisse anpassen oder eventuell aufgetretene Fehler in den Funktionen beseitigen. Die Daten der überarbeiteten Funktionen werden dann erneut von der Steuerungseinrichtung CS auf das Endgerät TER geladen.

Durch das Zusammenwirken mit dem Endgerät TER kann die Steuerungseinrichtung CS auch Funktionen ausführen, die typischerweise nur von Endgeräten ausgeführt werden. Die Steuerungseinrichtung CS kann z.B. auf dem Verbindungsabschnitt VL1 die bereits erwähnte ISDN-Setup-Nachricht empfangen und diese nicht, wie beschrieben, an das Endgerät TER weiterleiten, sondern bei Vorliegen bestimmter Voraussetzungen mit einer negativen Quittung beantworten. Wenn z.B. in der Setup-Nachricht angekündigt wird, daß das Endgerät TER Dienstfunktionen erbringen soll, die es nicht erbringen kann, kann die Steuerungseinrichtung CS statt des Endgerätes TER die Setup-Nachricht quittieren. In einem weiteren Schritt könnte die Steuerungseinrichtung CS sogar an die absendende Gegenstelle, durch die die Setup-Nachricht ausgelöst worden ist, eine Nachricht senden, mit der die Gegenstelle darüber informiert wird, welche Dienstfunktionen durch die Zusammenwirkung von Steuerungseinrichtung CS und Endgerät TER möglich ist. Dann kann die Gegenstelle statt der von dem Endgerät TER nicht erbringbaren Dienstfunktion eine erbringbare Dienstfunktion verlangen, z.B. kann die Gegenstelle statt einer Faxnachricht eine Textdatei ankündigen, die das Endgerät TER an seiner Anzeigevorrichtung DIS anzeigen kann.

Zwar zeigen die Darstellungen in den Figuren 1 und 2 Anordnungen, bei denen die Auskoppelungseinrichtung DECP und die Einkoppelungseinrichtung INCP jeweils als eigenständige, von der Vermittlungsstelle EX wie auch von der Steuerungseinrichtung CS unabhängige Einrichtungen. Die Auskoppelungseinrichtung DECP und die Einkoppelungseinrichtung INCP oder auch entsprechende Mittel, die mit diesen Einrichtungen vergleichbare Funktionen ausführen können, können aber auch in die Vermittlungsstelle EX oder die Steuerungseinrichtung CS integriert sein. Wenn die Teilnehmeranschlußleitung SL eine ISDN- Teilnehmeranschlußleitung ist, ist es aber auch möglich, daß die Vermittlungsstelle EX bereits die D-Kanal-Datenpakete von den für die Teilnehmeranschlußleitung SL bestimmten B-Kanal-Datenpaketen mit Hilfe einer in die Vermittlungsstelle EX integrierten Auskoppelungseinrichtung DECP trennt und auf dem Verbindungsabschnitt VL1 an die Steuerungseinrichtung CS sendet. Diese Ausführungsform der Erfindung ist besonders dann sehr vorteilhaft, wenn die Vermittlungsstelle EX auf diese Weise mehrere gleichartige und zu der Teilnehmeranschlußleitung SL parallele Teilnehmeranschlußleitungen behandelt und deren jeweiligen D-Kanal-Datenpakete auf einer Art Sammelleitung gemeinsam zu der Steuerungseinrichtung CS leitet. Der Verbindungsabschnitt VL1 ist dann als Teil dieser Sammelleitung anzusehen. In der bereits beschriebenen Weise verarbeitet die Steuerungseinrichtung CS die D-Kanal-Datenpakete der jeweiligen Teilnehmeranschlußleitungen. Dann sendet die Steuerungseinrichtung CS die modifizierten oder ergänzten D-Kanal-Datenpakete ebenfalls auf einer Art Sammelleitung wieder der Vermittlungsstelle EX zu, die diese dann wieder mit Hilfe einer in die Vermittlungsstelle EX integrierten Einkoppelungseinrichtung INCP den jeweiligen Datenströmen zu den jeweiligen Teilnehmeranschlußleitungen einkoppelt.

Das Demodulieren von Signalen aus einer Leitung mit analoger Übertragung und das Einmodulieren von solchen Signalen in eine Leitung können durch an sich bekannte Einrichtungen ausgeführt werden. Ein solches Verfahren und die entsprechenden Vorrichtungen werden z.B. in dem eingangs erwähnten Artikel ,,Rufnummernanzeige am analogen Anschluß" in der Zeitschrift Funkschau, Ausgabe 10/98 erwähnt. Ebenso sind Multiplexer und Demultiplexer an sich bekannt, mit denen bei digitaler Übertragung Datenpakete in eine Leitung eingespeist bzw. aus einer Leitung entnommen werden können. Solche Einrichtungen sind jedoch jeweils nur für den Betrieb auf einer einzigen Leitung ausgelegt. Für einen vorteilhaften Einsatz der Erfindung in der Praxis ist es jedoch zweckmäßig, daß ein ganzes Bündel von Teilnehmeranschlußleitungen an einem Übergabepunkt einer Vermittlungsstelle oder einer Vorfeldeinrichtung abgegriffen und zu einer erfindungsgemäßen Auskoppelungseinrichtung sowie zu einer erfindungsgemäßen Einkoppelungseinrichtung geführt werden. Wenn nämlich Verbindungen aus ganzen Bündeln von Teilnehmeranschlußleitungen ausgekoppelt und wieder eingekoppelt werden, können diese Verbindung gemeinsam zu einer Steuerungseinrichtung, z.B. der Steuerungseinrichtung CS geführt werden, die dann mit mehreren dem Endgerät TER vergleichbaren Endgeräten parallel zusammenwirken und die oben dargestellten Funktionen ausführen kann. Auf diese Weise ist es einem Anbieter von Telekommunikationsdienstleitungen möglich, mit Hilfe der Steuerungseinrichtung CS gleichzeitig diese Funktionen an einer Vielzahl von Teilnehmeranschlußleitungen anzubieten und sich so in seinem Dienstleistungsangebot von anderen Anbietern von Telekommunikationsdienstleistungen zu unterscheiden.

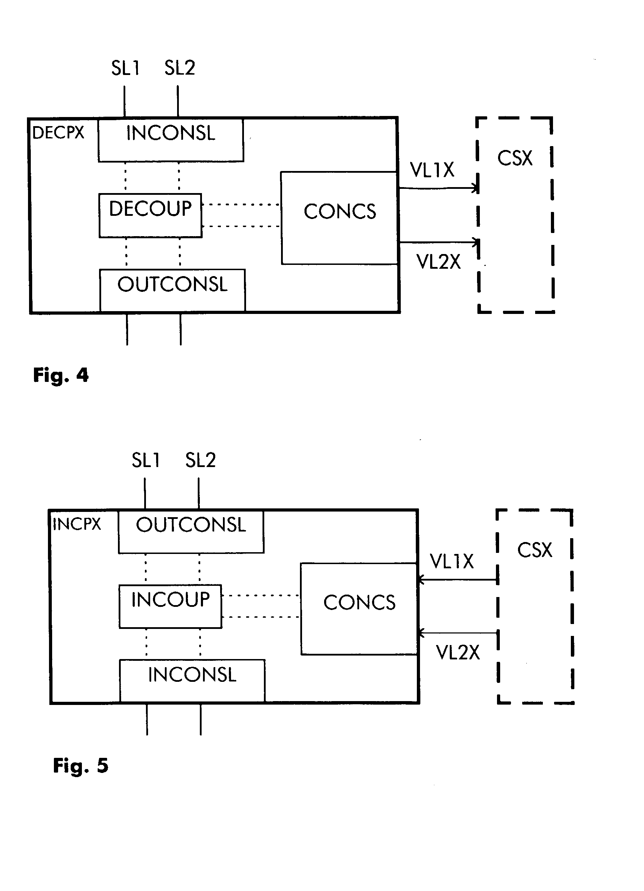

In Figur 4 ist eine Auskoppelungseinrichtung DECPX dargestellt, mit der aus mehreren Teilnehmeranschlußleitungen jeweils einer Verbindung ausgekoppelt werden kann. An die Auskoppelungseinrichtung DECPX sind über eine Anschlußeinheit INCONSL eine Teilnehmeranschlußleitung SL1 und eine Teilnehmeranschlußleitung SL2 angeschlossen, die wie die aus Figur 1 bekannte Teilnehmeranschlußleitung SL jeweils zwischen einer Vermittlungsstelle und einem Endgerät bestehen und auf denen ebenfalls mehrere Verbindungen gleichzeitig möglich sind, wie es anhand der Verbindungen VCP und VL auf der Teilnehmeranschlußleitung SL in Figur 1 erläutert wurde. Neben den Teilnehmeranschlußleitungen SL1 und SL2 können auch weitere, in Figur 4 nicht dargestellte Teilnehmeranschlußleitungen an die Auskoppelungseinrichtung DECPX angeschlossen werden. Die in die Anschlußeinheit INCONSL hineinführenden Teilnehmeranschlußleitungen SL1 und SL2 können z.B. von einem Übergabepunkt einer Vermittlungsstelle herführen, z.B. von der Vermittlungsstelle EX. Innerhalb der Auskoppelungseinrichtung DECPX führen die Teilnehmeranschlußleitungen SL1 und SL2 in eine Auskoppelungseinheit DECOUP und von dort weiter in eine Anschlußeinheit OUTCONSL. Von dort können die Teilnehmeranschlußleitungen SL1 und SL2 zu Endgeräten weitergeführt werden, z.B. zu dem aus Figur 1 bekannten Endgerät TER. Es ist aber auch möglich, daß die Auskoppelungseinrichtung DECPX in umgekehrter Richtung eingesetzt wird und die Teilnehmeranschlußleitungen SL1 und SL2 von Endgeräten herkommend an die Anschlußeinheit INCONSL angeschlossen werden und dann von der Anschlußeinheit OUTCONSL zu einer Vermittlungsstelle weitergeführt werden.

Innerhalb der Auskoppelungseinrichtung DECPX koppelt die Auskoppelungseinheit DECOUP aus der Teilnehmeranschlußleitung SL1 eine Verbindung VL1 X und aus der Teilnehmeranschlußleitung SL2 eine Verbindung VL2X aus. Anhand der Auskoppelungseinrichtung DECP in Figur 1 wurde ein solches Auskoppeln aus einer Teilnehmeranschlußleitung durch Demodulation oder Demultiplexen bereits beschrieben. Die ausgekoppelten Verbindungen VL1X und VL2X leitet die Auskoppelungseinheit DECOUP über eine Anschlußeinheit CONCS an eine Steuerungseinrichtung CSX weiter, z.B. die in ihren Funktionen der aus Figur 1 bekannten Steuerungseinrichtung CS gleicht. Die Verbindungen VL1 X und VL2X können zwischen der Anschlußeinheit CONCS und der Steuerungseinrichtung CSX auch auf einer Sammelleitung bestehen. Wenn die Teilnehmeranschlußleitungen SL1 und SL2 z.B. ISDN-Teilnehmeranschlußleitungen sind, kann die Auskoppelungseinheit DECOUP jeweils die auf den D-Kanälen dieser ISDN-Teilnehmeranschlußleitungen übertragenen Datenpakete auskoppeln, multiplexen und seriell an die Steuerungseinrichtung CSX übertragen. Die Auskoppelungseinrichtung DECPX kann auch über parallele Leitungen mit der Steuerungseinrichtung CSX verbunden sein. Die innerhalb der Auskoppelungseinrichtung DECPX bestehenden Verbindungen sind lediglich durch einige gestrichelte Linien angedeutet. Vergleichbar wie die Steuerungseinrichtung CS aus der Figuren 1 bis 3 auf der Verbindung VL Daten empfängt kann auch die Steuerungseinrichtung CSX auf den Verbindungen VL1X und VL2X Daten empfangen und dadurch in gleicher Weise wie die Steuerungseinrichtung CS Funktionen an Endgeräten bereitstellen.

In Figur 5 ist eine erfindungsgemäße Einkoppelungseinrichtung INCPX dargestellt, über die in Teilnehmeranschlußleitungen jeweils mindestens eine Verbindung eingekoppelt werden kann. Die Einkoppelungseinrichtung INCPX weist wie die Auskoppelungseinrichtung DECPX aus Figur 4 ein Anschlußmittel INCONSL und ein Anschlußmittel DECONSL auf, über die die ebenfalls aus Figur 4 bekannten Teilnehmeranschlußleitungen SL1 und SL2 in bekannter Weise an die Einkoppelungseinrichtung INCPX angeschlossen werden können. An die Einkoppelungseinrichtung INCPX ist über die aus Figur 4 bekannte Anschlußeinheit CONCS die aus Figur 4 bekannte Steuerungseinrichtung CSX angeschlossen. Im Unterschied zu Figur 4 sendet in Figur 5 jedoch die Steuerungseinrichtung CSX über die Verbindungen VL1X und VL2X Daten an die Einkoppelungseinrichtung INCPX. Zur Verdeutlichung des umgekehrten Datenflusses zeigen die Pfeilspitzen der Verbindungen VL1 X und VL2X zu der Einkoppelungseinrichtung INCPX hin. Anstatt der Auskoppelungseinheit DECOUP weist die Einkoppelungseinrichtung INCPX eine Einkoppelungseinheit INCOUP auf, die die Verbindungen VL1X in die Teilnehmeranschlußleitung SL1 und die Verbindung VL2X in die Teilnehmeranschlußleitung SL2 einkoppelt. Auf den Verbindungen VL1X und VL2X kann die Steuerungseinrichtung CSX manipulierte Daten zur Bereitstellung von Funktionen an Endgeräten senden, wie es oben im Zusammenhang mit der Verbindung VL und der Steuerungseinrichtung CS bereits beschrieben worden ist.

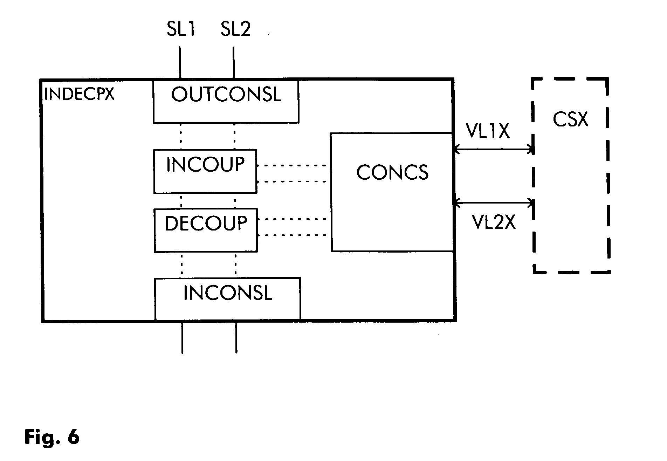

In Figur 6 ist eine Kombinationseinrichtung INDECPX dargestellt, die mit Hilfe der aus den Figuren 4 und 5 bekannten Komponenten sowohl die Funktionen der Auskoppelungseinrichtung DECPX als auch der Einkoppelungseinrichtung INCPX ausführen kann. Die Kombinationseinrichtung INDECPX koppelt wie die Auskoppelungseinrichtung DECPX aus Figur 4 mit Hilfe einer Auskoppelungseinheit DECOUP Verbindungen aus Teilnehmeranschlußleitungen aus. Im Beispiel aus Figur 6 sind die aus den vorigen Figuren bekannten Teilnehmeranschlußleitungen SL1 und SL2 über die ebenfalls bekannten Anschlußmittel INCONSL und OUTCONSL an die Kombinationseinrichtung INDECPX angeschlossen. Aus den Teilnehmeranschlußleitungen SL1 und SL2 koppelt die Auskoppelungseinheit DECOUP die Verbindungen VL1X und VL2X aus und führt diese zu der aus Figur 4 bekannten Anschlußeinheit CONCS, an die die bekannte Steuerungseinrichtung CSX angeschlossen werden kann. Über die Verbindungen VL1X und VL2X kann die Steuerungseinrichtung CSX sowohl Daten empfangen als auch senden. Dies wird in Figur 6 durch Pfeilspitzen an beiden Enden der Verbindungen VL1 X und VL2X verdeutlicht. Von der Steuerungseinrichtung CSX auf den Verbindungen VL1X und VL2X gesendete Daten werden von der Anschlußeinheit CONCS der Kombinationseinrichtung INDECPX empfangen und über die aus Figur 5 bekannte Einkoppelungseinheit INCOUP in die Teilnehmeranschlußleitungen SL1 und SL2 eingekoppelt.

## Patentansprüche

1. Verfahren zum Bereitstellen von Funktionen an einem Telekommunikations-Endgerät (TER), das mit einer Vermittlungsstelle (EX) über eine Teilnehmeranschlußleitung (SL) verbunden ist, **dadurch gekennzeichnet, daß** eine Verbindung der Teilnehmeranschlußleitung über eine netzseitige Steuerungseinrichtung (CS) geführt wird, indem eine Auskoppelungsvorrichtung die Verbindung aus der Teilnehmeranschlußleitung auskoppelt und eine Einkoppelungsvorrichtung die Verbindung wieder in die Teilnehmeranschlußleitung einkoppelt, und daß die Steuerungseinrichtung die Funktionen an dem Endgerät (TER) durch Manipulation von Daten bereitstellt, die auf der Verbindung übertragen werden.

2. Verfahren nach Anspruch 1, dadurch gekennzeichnet, daß die Teilnehmeranschlußleitung (SL) als eine Teilnehmeranschlußleitung eines digitalen Telekommunikationsnetzes betrieben wird.

3. Verfahren nach Anspruch 2, dadurch gekennzeichnet, daß die Teilnehmeranschlußleitung (SL) als eine Teilnehmeranschlußleitung eines ISDN-Telekommunikationsnetzes betrieben wird und daß als die über die Steuerungseinrichtung (CS) geführte Verbindung (VL1, VL2) ein D-Kanal aus der Teilnehmeranschlußleitung (SL) ausgekoppelt und in die Teilnehmeranschlußleitung wieder eingekoppelt wird.

4. Verfahren nach Anspruch 1, dadurch gekennzeichnet, daß durch Einkoppeln und Auskoppeln einer In-Band-Signalisierung die Verbindung (VL1, VL2) über die Steuerungseinrichtung (CS) geführt wird.

5. Verfahren nach Anspruch 1, dadurch gekennzeichnet, daß auf der Verbindung (VL1, VL2) Steuerungsdaten zwischen dem Endgerät (TER) und der Vermittlungsstelle ausgetauscht werden, daß die Steuerungseinrichtung (CS) die Steuerungsdaten überwacht und daß die Steuerungseinrichtung (CS) die Steuerungsdaten nach vorbestimmten Regeln verändert.

6. Verfahren nach Anspruch 1, dadurch gekennzeichnet, daß die Steuerungseinrichtung (CS) über die Verbindung (VL1, VL2) Daten in das Endgerät (TER) lädt.

7. Steuerungseinrichtung (CS) für ein Telekommunikationsnetz mit Einrichtungen zum Bereitstellen von Funktionen an einem Endgerät (TER), das über eine Teilnehmeranschlußleitung (SL) mit einer Vermittlungsstelle (EX) verbunden ist, **dadurch gekennzeichnet, daß** die Steuerungseinrichtung (CS) Empfangsmittel (R1 ) aufweist, um Daten zu empfangen, die auf einer aus der Teilnehmeranschlußleitung (SL) ausgekoppelten und in die Teilnehmeranschlußleitung (SL) wieder eingekoppelten Verbindung (VL1, VL2) übertragen werden, daß die Steuerungseinrichtung (CS) Sendemittel (S1) aufweist, um Daten auf der Verbindung (VL2) zu versenden, und daß die Steuerungseinrichtung Mittel aufweist, um die Funktionen an dem Endgerät (TER) durch Manipulation von Daten bereitzustellen, die auf der Verbindung (VL1, VL2) übertragen werden.

8. Endgerät (TER) für ein Telekommunikationsnetz mit Einrichtungen zum Bereitstellen von Funktionen an dem Endgerät (TER), das mit einer Vermittlungsstelle (EX) über eine Teilnehmeranschlußleitung (SL) verbindbar ist, aus der eine Verbindung (VL1, VL2) ausgekoppelt, über eine Steuerungseinrichtung (CS) geführt und wieder in die Teilnehmeranschlußleitung (SL) eingekoppelt wird, **dadurch gekennzeichnet, daß** das Endgerät (TER) Mittel aufweist, über die es auf der Verbindung (VL1, VL2) mit der Steuerungseinrichtung (CS) verbunden werden kann, und daß das Endgerät (TER) Mittel aufweist, um die Funktionen mit Hilfe von Daten bereitzustellen, die auf der Verbindung (VL1, VL2) übertragen werden und von der Steuerungseinrichtung (CS) manipuliert werden.

9. Vermittlungsstelle, an die über eine Teilnehmeranschlußleitung ein Endgerät angeschlossen werden kann, **dadurch gekennzeichnet, daß** die Vermittlungsstelle Auskoppelungsmittel aufweist, mit denen die Vermittlungsstelle aus der Teilnehmeranschlußleitung eine Verbindung auskoppeln kann, daß die Vermittlungsstelle Einkoppelungsmittel aufweist, mit denen die Vermittlungsstelle in die Teilnehmeranschlußleitung die Verbindung einkoppeln kann und daß die Vermittlungsstelle Anschlußmittel aufweist, mit denen eine Steuerungseinrichtung an die Verbindung angeschlossen werden kann.

10. Einkoppelungseinrichtung (INCPX) zum Bereitstellen von Funktionen an zumindest einem Telekommunikations-Endgerät, das mit einer Vermittlungsstelle über eine Teilnehmeranschlußleitung verbunden ist, **dadurch gekennzeichnet, daß** die Einkoppelungseinrichtung Anschlußmittel (INCONSL, OUTCONSL) aufweist, über die neben der Teilnehmeranschlußleitung (SL1 ) mindestens eine weitere Teilnehmeranschlußleitung (SL2) an die Einkoppelungseinrichtung angeschlossen werden kann, daß die Einkoppelungseinrichtung Einkoppelungsmittel (INCOUP) aufweist, mit denen die Einkoppelungseinrichtung in die Teilnehmeranschlußleitung (SL1) und in die mindestens eine weitere Teilnehmeranschlußleitung (SL2) jeweils mindestestens eine Verbindung (VL1X, VL2X) einkoppeln kann, und daß die Einkoppelungseinrichtung Anschlußmittel (CONCS) aufweist, über die mindestens eine Steuerungseinrichtung (CSX) an die von der Einkoppelungseinrichtung eingekoppelten Verbindungen angeschlossen werden kann und über die die Einkoppelungseinrichtung (INCPX) von der mindestens einen Steuerungseinrichtung (CSX) Daten empfangen kann, mit denen Funktionen zumindest an dem Endgerät bereitgestellt werden können.

11. Auskoppelungseinrichtung (DECPX) zum Bereitstellen von Funktionen an zumindest einem Telekommunikations-Endgerät, das mit einer Vermittlungsstelle über eine Teilnehmeranschlußleitung verbunden ist, **dadurch gekennzeichnet, daß** die Auskoppelungseinrichtung Anschlußmittel (INCONSL, OUTCONSL) aufweist, über die neben der Teilnehmeranschlußleitung (SL1) mindestens eine weitere Teilnehmeranschlußleitung (SL2) an die Auskoppelungseinrichtung angeschlossen werden kann, daß die Auskoppelungseinrichtung Auskoppelungsmittel (DECOUP) aufweist, mit denen die Auskoppelungseinrichtung aus der Teilnehmeranschlußleitung (SL1) und aus der mindestens einen weiteren Teilnehmeranschlußleitung (SL2) jeweils mindestestens eine Verbindung (VL1X, VL2X) auskoppeln kann, und daß die Auskoppelungseinrichtung Anschlußmittel (CONCS) aufweist, über die mindestens eine Steuerungseinrichtung (CSX) an die von der Auskoppelungseinrichtung ausgekoppelten Verbindungen angeschlossen werden kann und über die die Auskoppelungseinrichtung (INCPX) an die mindestens eine Steuerungseinrichtung (CSX) Daten senden kann, mit denen Funktionen zumindest an dem Endgerät bereitgestellt werden können.

12. Kombinationseinrichtung (INDECPX) zum Bereitstellen von Funktionen an zumindest einem Telekommunikations-Endgerät, das mit einer Vermittlungsstelle über eine Teilnehmeranschlußleitung verbunden ist, **dadurch gekennzeichnet, daß** die Kombinationseinrichtung Anschlußmittel (INCONSL, OUTCONSL) aufweist, über die neben der Teilnehmeranschlußleitung (SL1) mindestens eine weitere Teilnehmeranschlußleitung (SL2) an die Kombinationseinrichtung angeschlossen werden kann, daß die Kombinationseinrichtung Auskoppelungsmittel (DECOUP) aufweist, mit denen die Kombinationseinrichtung aus der Teilnehmeranschlußleitung (SL1) und aus der mindestens einen weiteren Teilnehmeranschlußleitung (SL2) jeweils mindestestens eine Verbindung (VL1X, VL2X) auskoppeln kann, daß die Kombinationseinrichtung Einkoppelungsmittel (INCOUP) aufweist, mit denen die Kombinationseinrichtung in die Teilnehmeranschlußleitung (SL1 ) und in die mindestens eine weitere Teilnehmeranschlußleitung (SL2) jeweils die von der Kombinationseinrichtung ausgekoppelten Verbindungen (VL1X, VL2X) wieder einkoppeln kann, und daß die Kombinationseinrichtung Anschlußmittel (CONCS) aufweist, über die mindestens eine Steuerungseinrichtung (CSX) an die von der Kombinationseinrichtung ausgekoppelten Verbindungen angeschlossen werden kann und über die die Kombinationseinrichtung (INCPX) an die mindestens eine Steuerungseinrichtung (CSX) Daten senden kann oder von der mindestens einen Steuerungseinrichtung (CSX) Daten empfangen kann, wobei mit den Daten Funktionen zumindest an dem Endgerät bereitgestellt werden können.
